# EUROPEAN PATENT APPLICATION

(11) **EP 2 337 175 A1**
(43) Date of publication of application: **22.06.2011**
(21) Application number: 09180037.5
(22) Date of filing: 18.12.2009
(51) Int. Cl.: H02G 3/30, G02B 6/44, H04Q 1/14, H04Q 1/16

(54) **A cable management system having spools arranged on parallel tracks**

(71) Applicant: RESEARCH IN MOTION LIMITED, Waterloo, Ontario N2L 3W8 (CA)
(72) Inventor: Gross, John Andrew, Waterloo Ontario N2L 3L3 (CA); Enta, Roger William, Waterloo Ontario N2L 3L3 (CA); Fewster, David I., Waterloo Ontario N2L 3L3 (CA)
(74) Representative: Fennell, Gareth Charles

(57) **Abstract**

A cable management system (100) includes a mounting member (105) defining at least two substantially parallel tracks (110) and at least two spools (115). Each spool (115) includes an engagement member (135) located at the proximate end (125) of the spool and an annular flange (140) coupled to the distal end (130) of the spool (115). The engagement member (135) is configured to releasably engage with one of the tracks (110). Each spool (115) is independently mountable to the tracks (110) using the engagement member (135). Each of the tracks (110) has a central portion (200) on a first face (210) of the mounting member (105) and at least one insertion portion (205). The insertion portion (205) is substantially perpendicular to and contiguous with the central portion (200) of the track (110). When the spools (115) are mounted on the mounting member (105), the spools (115) are positioned such that their respective engagement members (135) are engaged with the central portion (200) of the track (110).

## Description

### FIELD OF TECHNOLOGY

The present disclosure relates generally to cable management systems.

### BACKGROUND

Cable management is important in many fields, such as IT, communications, power distribution, facility wiring, local area networks, operation centers, and other similar areas. Cable or wiring systems are often centralized in a communication closet, an IT room, or other central wiring locale. However, an accumulation of cables in the central wiring locale can become unwieldy and difficult to manage, resulting in a disarray and disorganization of cables.

Cable trays, cable ladders, cable racks, and cable brackets have been designed to aid in the cable management of cable connections and wiring. In particular with cable management systems used in the IT or telecommunications industries, data cables often need to be added, moved, or removed many times during the life of their installation. Cable trays, racks, ladders, and brackets can provide and direct communication paths for the cables and cable connections and can provide easy access to the individual cable connections for installing or removing individual cables or devices.

### BRIEF DESCRIPTION OF THE DRAWINGS

Embodiments of the present application will now be described, by way of example only, with reference to the attached Figures, wherein:

FIG. 1 is an exemplary cable management system having spools arranged on parallel tracks in accordance with an exemplary embodiment;

FIG. 2 is a mounting member of an exemplary cable management system having spools arranged on parallel tracks in accordance with an exemplary embodiment;

FIG. 3 is a perspective view of a spool of an exemplary cable management system having spools arranged on parallel tracks in accordance with an exemplary embodiment;

FIG. 4 is a side perspective view of the spool illustrated in FIG. 3 in accordance with an exemplary embodiment;

FIG. 5 is a partial view of an exemplary cable management system having spools arranged on parallel tracks in accordance with an alternative embodiment having an end control member;

FIG. 6 is a perspective view of electronic gear in an uninstalled configuration without an exemplary cable management system installed;

FIG. 7 is a perspective view of an exemplary cable management system installed in conjunction with associated electronic gear in an installed configuration;

FIG. 8 is a perspective view of a spool of an exemplary cable management system having spools arranged on parallel tracks in accordance with an alternative embodiment; and

FIG. 9 is a perspective view of a mounting member having an insertion portion configured to receive the spool illustrated in FIG. 8 in accordance with an alternative embodiment.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein.

The following figures describe a cable management system having at least two parallel tracks for arranging spools independently, whereby the spools may be offset in relation to one another. While the following description describes a cable management system having spools in relation to fiber cables, one of ordinary skill in the art will appreciate that the cable management system having spools can be implemented to manage copper cables, telecommunication cables, network cables, LAN cables, power cables or the like.

As more connections and cables are routed through a central wiring locale, connection density increases, and the resulting cable congestion becomes a problem. The cables can become tangled which makes them difficult to work with and can result in devices accidentally becoming unplugged or individual cable fibers or wires breaking. Additionally, problems with data flow can arise. Bends and kinks can be made in the cables when trying to fit the cables within the central wiring locale. Such bends and kinks in the cables can reduce bandwidth thereby impeding data flow to computers, telephones, or other devices that are remote from the central wiring locale. This impact on data flow creates more of a problem when fiber optic cables are used. Bends in the fiber optic cables need to be minimized because any sharp bends along the fiber optic cable can significantly reduce data flow and can even stop data flow through the cable.

The cable management system, according to the present disclosure, comprises a mounting member and at least two spools. The mounting member defines at least two substantially parallel tracks. Each spool comprises a spool body having a proximate end and a distal end. An engagement member can be located at the proximate end of the spool body. The engagement member can be configured to be releasably engagement with one of the at least two substantially parallel tracks. An annular flange can be coupled to the distal end of the spool body. Each spool is independently mountable to the at least two substantially parallel tracks using the engagement member. However, one of ordinary skill in the art will appreciate that any number of spools or tracks can be implemented so long as the cable management system has at least two spools and the mounting member defines at least two substantially parallel tracks. Additionally, other configurations and arrangements will be described below in relation to illustrated embodiments. One of ordinary skill would appreciate that these elements from the illustrated embodiment can be optionally included to the described benefits of the presently disclosed cable management system.

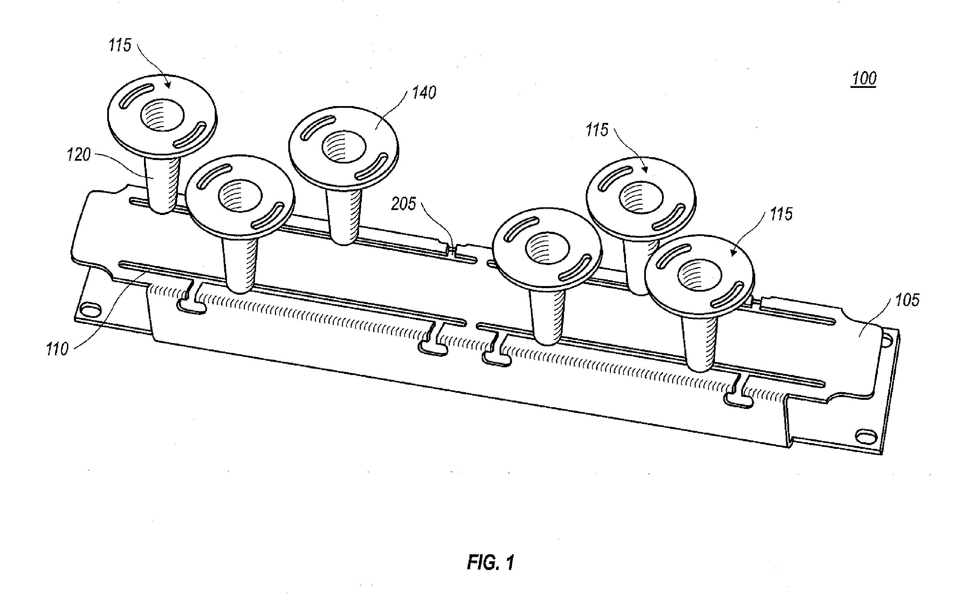

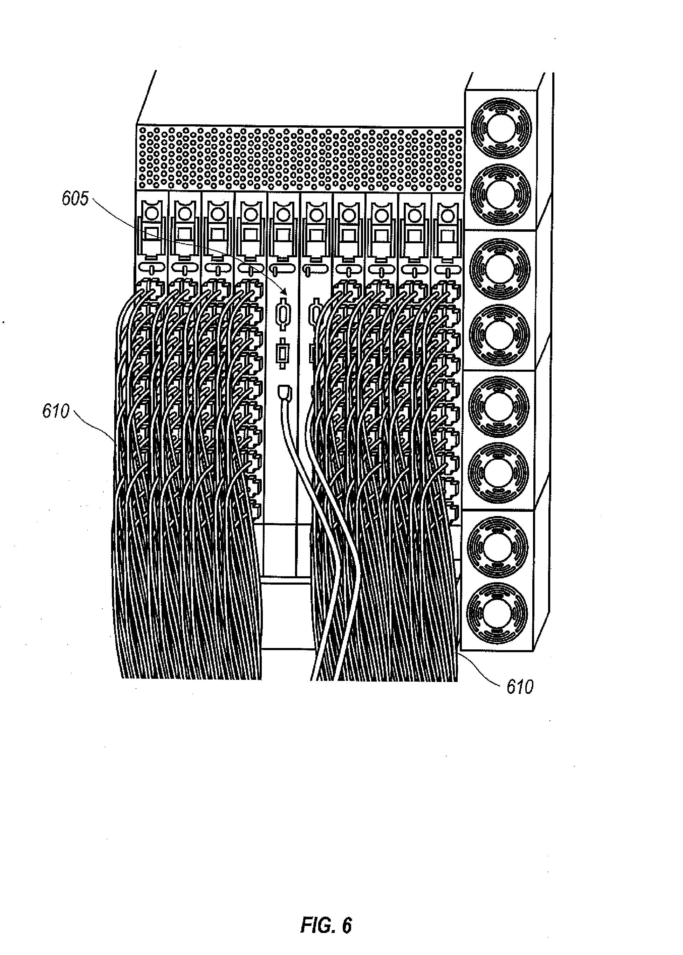

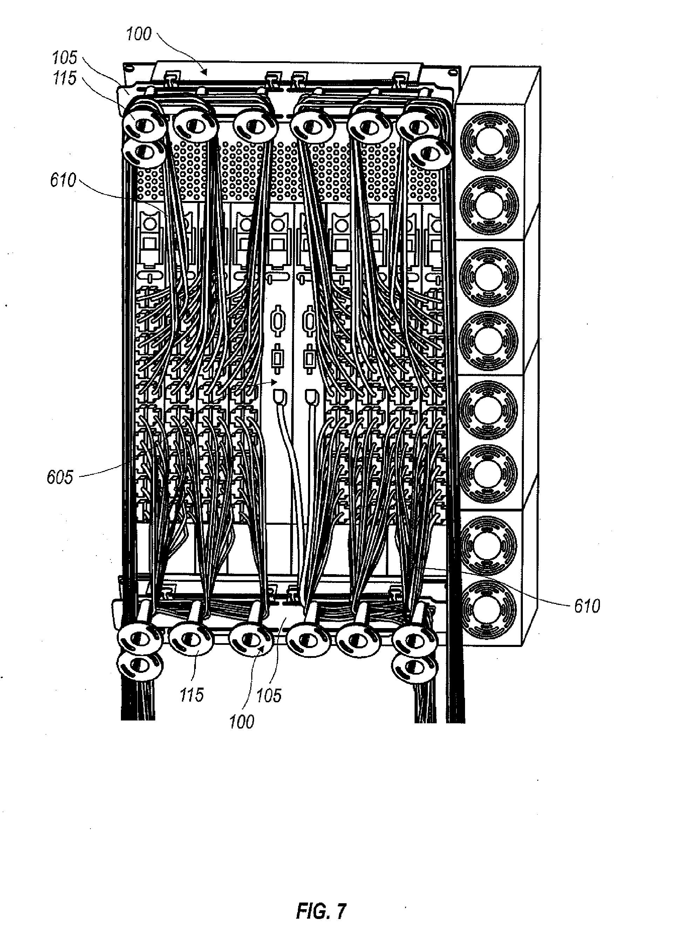

An exemplary cable management system according the present disclosure is illustrated in FIG. 1. Additionally, in FIGS. 6 and 7, electronic gear 605 is shown in conjunction with an exemplary cable management system as described herein, in an uninstalled and installed configuration. The electronic gear 605 for example can be high speed data switches connected to other electronic devices via fiber optic cables 610. In other embodiments, the electronic gear 605 can be hubs, servers, computers, modems, data center backbones, and the like. As seen in FIG. 6, the electronic gear 605 is shown in an uninstalled configuration without an exemplary cable management system 100 installed. As seen in FIG. 6, the cables 610 of the electronic gear 605 are disorganized and in disarray. FIG 7 illustrates the exemplary cable management system shown in relation to associated electronic gear 605 in an installed configuration. As seen in FIG. 7, the cables 610 of the electronic gear 605 are routed and organized using the exemplary cable management system 100.

In the exemplary embodiment illustrated in FIG. 1, a cable management system 100 having at least two parallel tracks 110 is shown. The cable management system 100 comprises a mounting member 105. The mounting member 105 defines the substantially parallel tracks 110. In the illustrated embodiment, four tracks 110 are are shown. The parallel tracks 110 are configured to cooperate with an engagement member 13 5 of a corresponding spool 115.

Spools 115 in accordance with an exemplary embodiment can be arranged in an offset pattern. While an offset pattern is illustrated, the spools 115 can be arranged in other patterns as well using the adjustable mounting system as described herein. The spools 115 each include an annular flange 140 coupled to a spool body 120. Each spool 115 can be independently mountable to the at least two tracks 110 using the engagement member 135, which will be described in further detail below. The cable management system 100 illustrated in FIG. 1 shows six spools 115 with at least one spool 115 in each of the four tracks 110. However, one of ordinary skill in the art will appreciate that any number of spools 115 or tracks 110 can be implemented so long as the cable management system 100 has at least two spools 115 and the mounting member 145 defines at least two substantially parallel tracks 110.

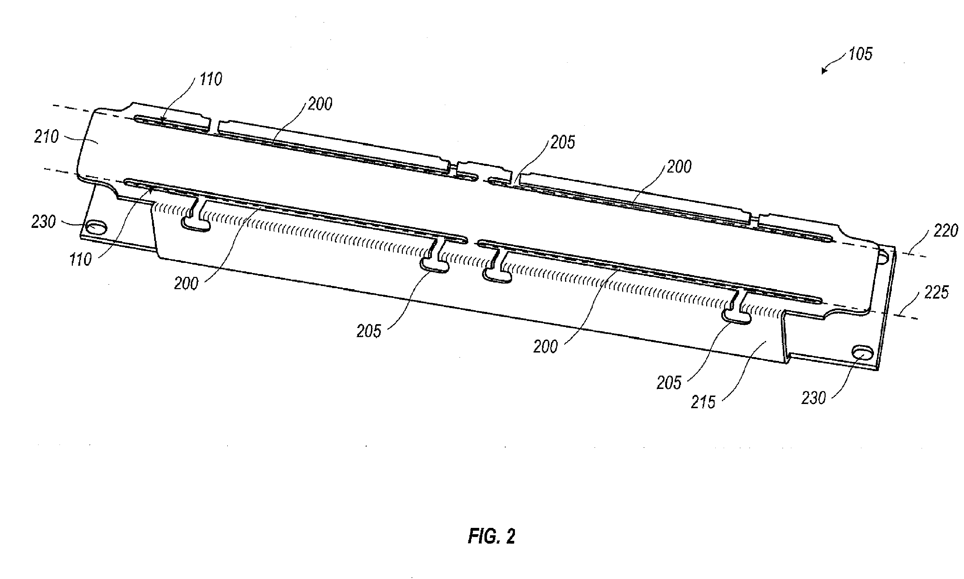

FIG. 2 illustrates the mounting member 105 of the exemplary cable management system 100. A first face 210 of the mounting member 105 can define the at least two substantially parallel tracks 110. Four tracks 110 are illustrated in FIG 2. When arranged according to this exemplary embodiment, a first pair of tracks 110 are aligned such that a centerline 220 of each track 110 is along the same line. Additionally, a second pair of tracks 110 are aligned such that a centerline 225 of each track of the second pair of tracks 110 is along the same line. However, in alternative embodiments, the centerlines 220, 225 of each of the four tracks 110 can be arranged in an offset and parallel orientation.

Each track of the tracks 110 can comprise a central portion 200 defined by the first face 210 of the mounting member 105 and at least one insertion point 205. The at least one insertion point 205 can be substantially perpendicular to the central portion 200 and defined by the second face 215 of the mounting member 105. The at least one insertion portion 205 is also contiguous with the central portion 200, thereby permitting the insertion of one of the spools 115 into the track 110 such that the spool 115 can slide within the central portion 200 of the track 110. In the particular embodiment illustrated in FIG. 2, the first face 210 of the mounting member 105 defines four substantially parallel tracks 110. While the illustrated embodiment of FIG. 2 shows four tracks 110, one of ordinary skill will appreciate that the mounting member 105 can define two, three, four, or more tracks such that at least two are substantially parallel. When the tracks 110 are arranged such that at least two of the tracks 110 are parallel, the spools 115 can be arranged to accommodate the varying position of the electronic gear and size and position of the bundle of cables for connection to the electronic gear.

While the mounting member 105 illustrated in FIG. 2 is a hollow rectangular structure, one of ordinary skill in the art will appreciate that the mounting member 105 can be a hollow square structure, an H-shaped structure, a flat panel having a pair of mounting brackets, a C-shaped structure, or any other structure that can define at least two substantially parallel tracks 110. FIG. 2 also illustrates the mounting member 105 as including at least one mounting aperture 230. The mounting aperture 230 can be configured to receive a bolt, screw, or other securing element to couple the mounting member 105 to a wall, a network closet, or any other area where cables or wires can accumulate and need to be routed and organized. While FIG. 2 illustrates a plurality of mounting apertures 230, the mounting member 105 can have no mounting apertures. For example, a mounting member 105 without mounting apertures can be coupled to an area where cables and wires accumulate by adhesively coupling the mounting member 105 to that area. The mounting member 105 can be made of steel, plastic, or any other durable material that can define at least two substantially parallel tracks 110 and that can support a plurality of cables that will be routed and managed by the cable management system 100. In an alternative embodiment, the mounting member 105 can be coated with a static dissipative paint or a conductive paint, thereby allowing electric charges to flow through the mounting member 105 to a grounding location. The coating of static dissipative paint or conductive paint prevents the buildup of excess charges or electrostatic discharges by allowing the charges to flow from the mounting member 105 to the grounding location, thereby shielding the cable management system 100 from electrostatic charges and other similar charges that can build up.

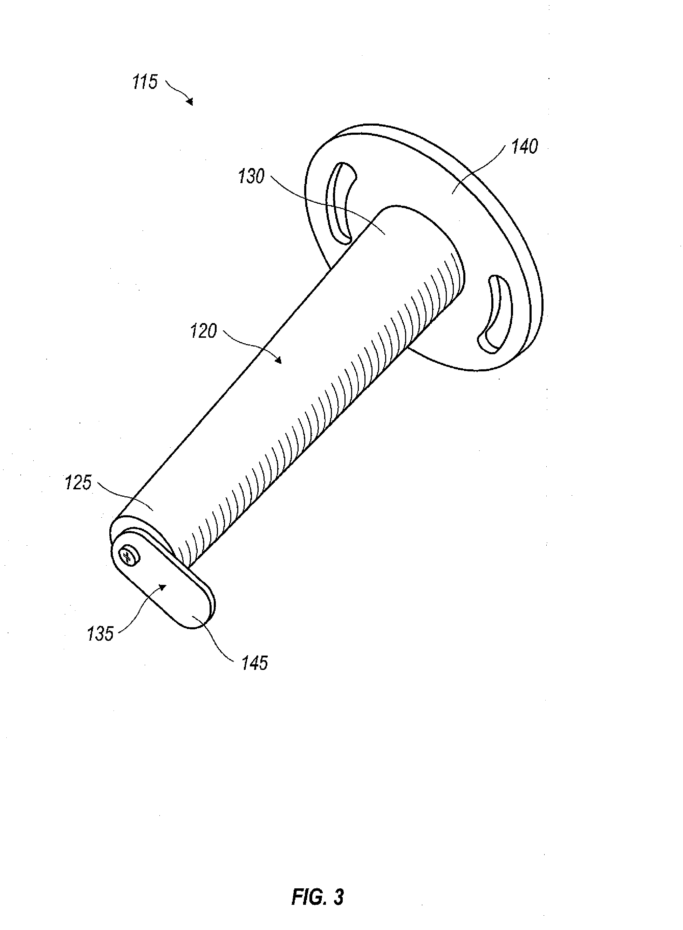

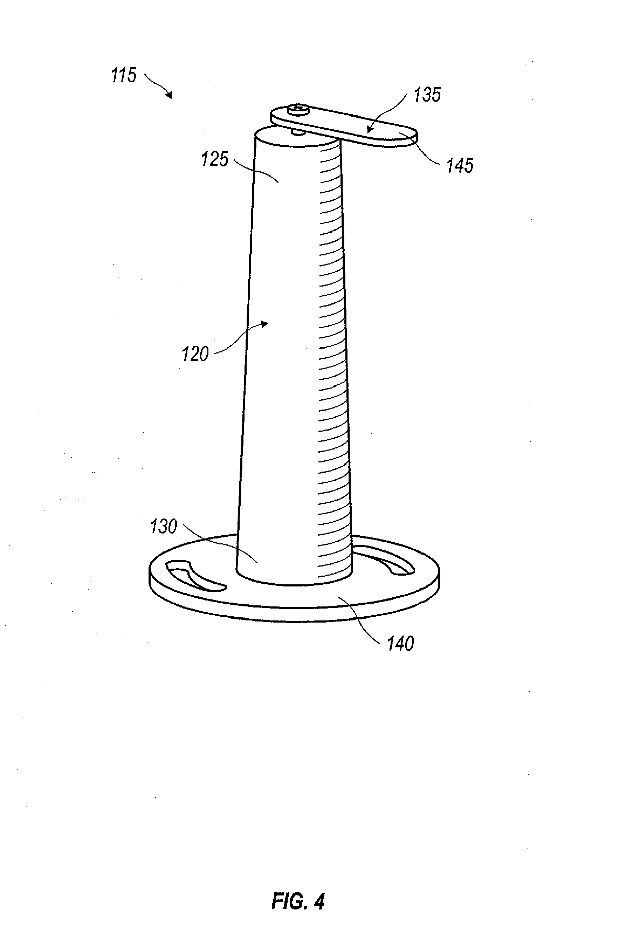

FIGS. 3 and 4 are perspective views of the spool 115 of the exemplary cable management system 100 having spools arranged on parallel tracks in accordance with an exemplary embodiment. The spool 115 illustrated in FIGS. 3 and 4 comprises the spool body 120 having a proximate end 125 and a distal end 130. The spool body 120 can have a uniform cross-section or can taper. For example, as illustrated in FIGS. 3 and 4, the spool body 120 tapers from the distal end 130 to the proximate end 125, such that the distal end 130 is wider than the proximate end 125. The taper of the spool body 120 assists in preventing the cable from sliding off of the cable management system 100. The spool 115 can be made of plastic, metal, or any other durable material that can support a plurality of cables that will be routed and managed by the cable management system 100. One of ordinary skill in the art will appreciate that the spool 115 can be made of plastic. In other alternative embodiments, the spool can comprise a plastic having an electrostatic additive thereby allowing conduction of charge to flow to the mounting member 105. For example, the plastic can be impregnated with an electrostatic additive. The electrostatic additive prevents the buildup of excess charges or electrostatic discharges by allowing the charges to flow from the spool 115 to the mounting member 105 and in at least one example to a grounding location, thereby shielding the cable management system 100 from electrostatic charges and other similar charges that can build up.

As previously discussed, the annular flange 140 can be coupled to the distal end 130 of the spool body 120. The annular flange 140 can have a diameter greater than the diameter of the spool body 120. While the illustrated embodiment is an annular flange 140, the flange 140 can have a square shape, a diamond shape, a triangular shape, an ovular shape, or any other shape that permits cables or wires to be routed and maintained around the spool 115. In another alternative embodiment the spool 115 can have projections that project from the distal end 130 of the spool body 115 wherein the projections route and maintain cables or wires around the spool 115 (not shown).

The engagement member 135 can be coupled to the proximate end 125 of the spool 115. In one embodiment as illustrated, the engagement member 13 5 includes a tab 145 that is wider than the at least two substantially parallel tracks 110 of the mounting member 105. The tab can be configured to engage an underside surface of the mounting member 105 adjacent to the track 110.

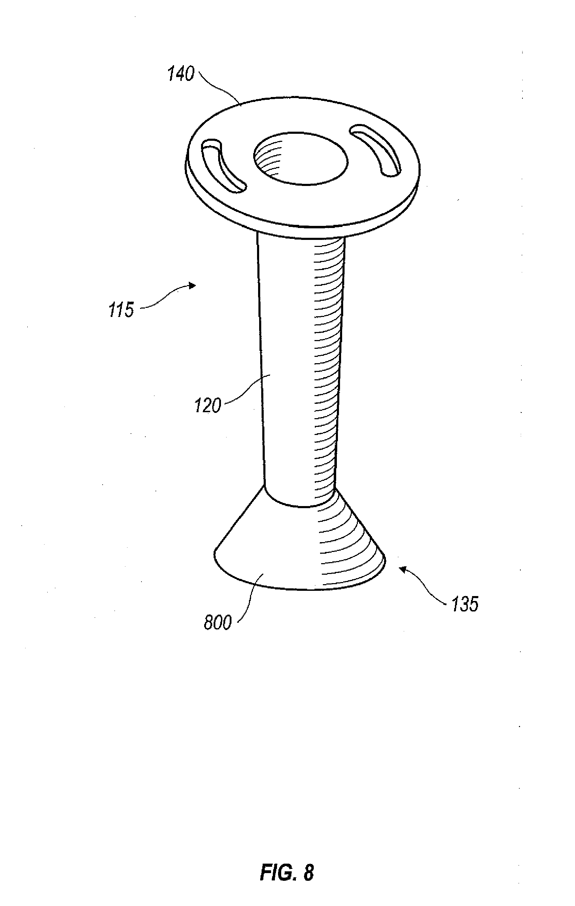

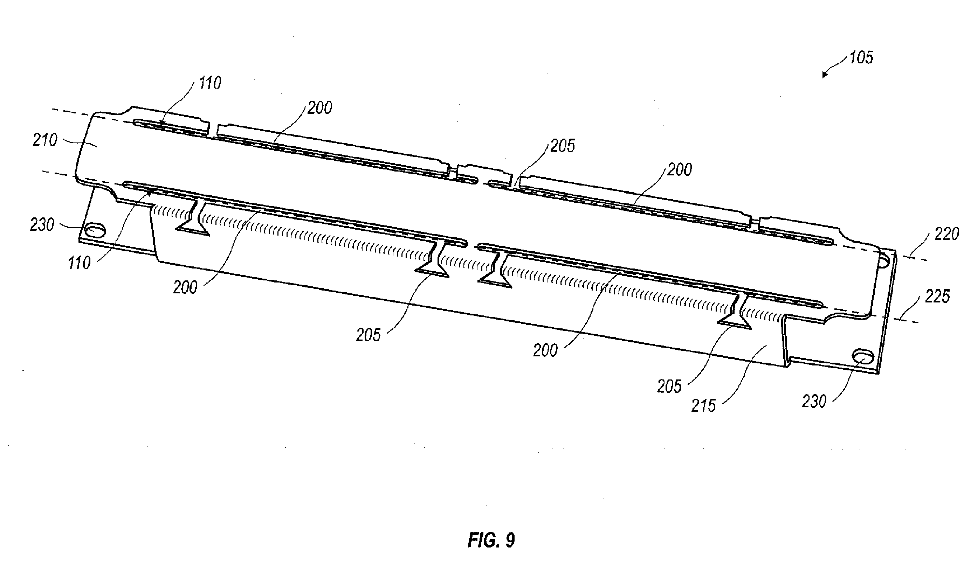

In an alternative embodiment illustrated in FIG. 8, the engagement member 135 can include a key 800 for engageably coupling the spool 115 to one of the at least two substantially parallel tracks 110 of the mounting member 105 (shown in FIG. 9). The key 800 of the engagement member 135 is configured such that the insertion portion 205 (shown in FIG. 9) of the track 110 and the key 800 are shaped for integral cooperation with each other. In an alternative embodiment, the key 800 of the engagement member 135 and the insertion portion 205 of the track 110 can be configured and shaped to matingly engage so that the key 800 of the engagement member 105 can slide or move within the track 110.

In at least one embodiment, the engagement member 135 can be biased to an engaged position such that the spool 115 remains engaged with one of the at least two tracks 110 when the cable management system 100 is in an assembled configuration. The engagement member 135 can be biased via a spring or the like to maintain the engaged position relative to the tracks 110.

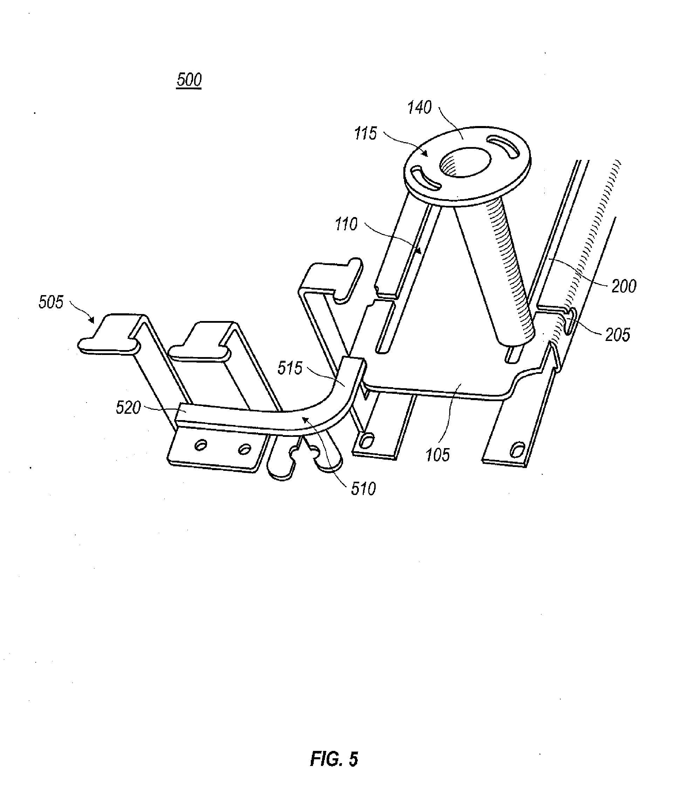

FIG 5 is partial view of the exemplary cable management system 500 in accordance with an alternative embodiment having an end control member 505. In FIG. 5, the cable management system 500 comprises the mounting member 105, at least two spools 115, and an end control member 505 coupled to an end of the mounting member 105. The mounting member 105 defines at least two substantially parallel tracks 110. The at least two substantially parallel tracks 110 comprise the central portion 200 on the first face 210 of the mounting member 105 and the insertion portion 205 that is substantially perpendicular to the central portion 200 and contiguous with the central portion 200. The spool 115 can be configured according to the embodiments as described above. For example, the spool 115 can comprise the spool body 120 having the annular flange 140 coupled to the distal end 130 (FIGs. 3-4) of the spool body 120. The end control member 500 can be releasably coupled to the mounting member 105. As illustrated in FIG. 5, the end control member 500 can include a guide 510 that has a first end 515 that is substantially parallel to the at least two tracks 110 of the mounting member 105. The end control member 505 can also include a second end 520 that is substantially perpendicular to the tracks 110 of the mounting member 105. The end control member 505 is configured to further route and maintain organization of the cables or wires such that fewer kinks or bends are made in the cables or wires when the cables or wires are routed to devices remote from a central wiring locale. For example, the end control member 505 can route cable by maintaining the cable being received at the cable management system 500 from being positioned such that the cable is not maintained a distance away from the associated electronic gear. The end control member 505 can be made of plastic, metal, or any other durable material that can support a plurality of cables that will be routed and managed by the cable management system 500 while minimizing the number of kinks or bends in the cables.

The assembly and operation of the cable management system 100 will be described with respect to the cable management system illustrated in FIGS. 1, 2, 3 and 6. However, one of ordinary skill in the art will appreciate that the assembly and operation of the cable management system 100 can be applied to any of the embodiments described herein. As described above, each spool 115 is independently mountable to the at least two substantially parallel tracks 110 of the mounting member 105 using the engagement member 135 of the spool 115. For example, with a spool 115 having an engagement member 135 that includes a tab, the spool 115 is inserted through the insertion portion 205 of one of the at least two substantially parallel tracks 110. When the spool 115 is inserted, the tab 145 of the engagement member 135 faces outwardly with respect to the insertion portion 205 of the track 110. In other words, the tab 145 faces outwardly and approximately perpendicular to the second face 215 of the mounting member 105, thereby allowing the tab to pass through the insertion portion 205 of the track 110. The spool 115 can then be slid through the insertion portion 205 and down the central portion 200 of the track, and the tab can engage with track 110. The spool 115 can then be slid within the central portion 200 and positioned anywhere along the central portion 200 to accommodate the various routings of cables that will reduce the number of kinks and bends of the cables. When the spool 115 is slid through the central portion 200, an upper surface of the spool 115 engages and is restrained by the underside surface of the mounting member 106 adjacent to the track 110. Additionally, the tab 145 of the engagement member 135 can face inward, which is substantially 180 degrees from the outwardly facing configuration as described above. When all the spools 115 of the at least two spools 115 are inserted into the at least two substantially parallel tracks 110, the spools 115 can be slid along their respective track such that the spools 115 are aligned offset from each other. For example, the spools 115 that are inserted on tracks 110 having centerlines that are parallel can be positioned on the tracks 110 such that the spools 115 are offset to each other and do not share a common perpendicular line to the track 110.

In an alternative embodiment (not shown), the spool body 120 can be rotated to engage the engagement member 135 (for example, the key) with the track 110, thereby ensuring that the spool 115 can slide within the track 110 and remain engaged with the track 110 when cables or wires are routed around the spool 115. In another alternative embodiment (not shown), the engagement member 135 can have a biased key or tab that can be biased to an engaged position when the spool 115 has been inserted into one of the at least two substantially parallel tracks 110.

When the cable management system 100 is assembled and the at least two spools 115 are in an installed configuration, the at least two spools 115 are positioned such that the respective engagement members 135 of each spool 115 are engaged with the central portion 200 of the at least two substantially parallel tracks 110. With the at least two spools 115 engaged with the central portion 200 of the at least two tracks 110 and positioned along the central portions 200, cables or wires can be routed or wound around the at least two spools 115 so that data can flow from the central wiring locale to remote devices. Because the spools 115 are independently mountable and can be positioned anywhere along the central portions 200 of the at least two tracks 110, the cables or wires can be routed with fewer kinks and bends in the cables or wires. The spools 115 provide support for the cables and provide paths that have fewer corners and bends, resulting in fewer kinks and bends in the cables. With fewer kinks and bends, there can be less impact on the data flow through the cables. For example, because the adjustability of the spools 115 within the at least two tracks 110 permits substantially kink-free and bend-free cable routing, the chances of reduced bandwidth due to routing is diminished. Even more, because the independently mountable spools 115 are slidable within the at least two tracks 110, potential damage and breakage of the individual fibers or wires of the cables are reduced because the cable management system 100 reduces the amount of bends and kinks that result in existing traditional cable racks or brackets. Additionally, because the spools 115 are independently adjustable and mountable to the at least two tracks 110, the spools 115 can be individually removed to accommodate the removal or addition of cables or to provide access to individual cable connections that require repair.

Although the above-described method has been described in relation to a cable management system 100 having spools arranged on parallel tracks for fiber optic cable systems, one of ordinary skill in the art will appreciate that the cable management system 100 having spools arranged on parallel tracks can be used with any other types of cable or wiring system. For example, the cable management system 100 having spools arranged on parallel tracks can be implemented with audio wiring or cables, entertainment systems, telecommunication cable closets, IT network closets, home networking systems, cable systems for televisions, home entertainment cable or wire systems, or any other system that requires organization of cables and wires. Various modifications to and departures from the disclosed embodiments will occur to those having skill in the art. The subject matter that is intended to be within the spirit of this disclosure is set forth in the following claims.

## Claims

1. A cable management system (100) comprising:
a mounting member (105) defining at least two substantially parallel tracks (110);
and
at least two spools (115), each spool (115) comprising:
a spool body (120) having a proximate end (125) and a distal end (130);
an engagement member (135) located at the proximate end (125) of the spool body (120), said engagement member (135) configured to be releasably engaged with one of said tracks (110); and
an annular flange (140) coupled to the distal end (130) of the spool body (120), said annular flange (140) having a diameter greater than a diameter of the spool body;
wherein each spool (115) is independently mountable to said tracks (110) using the engagement member (135).

2. The cable management system (100) of claim 1, wherein each said track (110) comprises:
a central portion (200) on a first face (210) of the mounting member (105), and
at least one insertion portion (205) that is:
substantially perpendicular to the central portion (200), and contiguous with the central portion (200).

3. The cable management system (100) of claim 2, wherein the at least two spools (115), in an installed configuration, are positioned such that the respective engagement members (135) of each spool (115) are engaged with the central portion (200) of the track (110).

4. The cable management system (100) as recited in claims 1-3, wherein said engagement member (135) includes one of a key (800) for engageably coupling the spool (115) to said track (110) and a tab (145) that is wider than said track (110) and engages an underside portion of the mounting member (105) adjacent to the track (110).

5. The cable management system (100) as recited in any of the preceding claims, wherein said engagement member (135) is biased to an engaged position.

6. The cable management system (100) as recited in any of the preceding claims, wherein said engagement member (135) engages the track (110) upon rotation of the spool body (120).

7. The cable management system (100) as recited in any of the preceding claims, wherein the spool body (120) tapers from the distal end (130) to the proximate end (125), such that the distal end (130) is wider than the proximate end (125).

8. The cable management system (100) as recited in any of the preceding claims, wherein the mounting member (135) is coated with one of a static dissipative paint and a conductive paint.

9. The cable management system (100) as recited in any of the preceding claims, wherein the spool (115) comprises a plastic having an electrostatic additive.

10. The cable management system (500) as recited in any of the preceding claims, further comprising an end control member (505).

11. The cable management system (500) of claim 10, wherein said end control member (505) is releasably coupled to the mounting member (105).

12. The cable management system (500) as recited in claims 10-11 wherein said end control member (505) includes a guide (510) that has a first end (515) that is parallel to said at least two tracks (110).

13. The cable management system (500) as recited in claims 10-12, wherein said end control member (505) includes a second end (520) that is perpendicular to the at least two tracks (110).

14. The cable management system (100) as recited in any of the preceding claims, wherein said at least two tracks (110) comprises four tracks and wherein a first pair of said tracks are aligned such that a centerline (220) of each track of the first pair of tracks is along the same line.

15. The cable management system (100) of claim 14, wherein a second pair of tracks are aligned such that the centerline (225) of each track of the second pair of tracks is along the same line.

## Amended claims

### Amended claims in accordance with Rule 137(2) EPC.

**1.** A cable management system (100) comprising:
amounting member (105) defining at least two substantially parallel tracks (110), each track defining a slot; and
at least two spools (115), each spool (115) comprising:
a spool body (120) having a proximate end (125) and a distal end (130);
an engagement member (135) located at the proximate end (125) of the spool body (120), said engagement member (135) configured to be releasably engaged with one of said tracks (110); and
an annular flange (140) coupled to the distal end (130) of the spool body (120), said annular flange (140) having a diameter greater than a diameter of the spool body;
wherein each spool (115) is independently mountable to said tracks (110) using the engagement member (135);
wherein each said track (110) comprises:
a central portion (200) on a first face (210) of the mounting member (105), and
two insertion portions (205) that are each defined on a second face of the mounting member, such that each insertion portion is:
substantially perpendicular to the central portion (200), and
contiguous with the central portion (200).

**2.** The cable management system (100) of claim 1, wherein the at least two spools (115), in an installed configuration, are positioned such that the respective engagement members (135) of each spool (115) are engaged with the central portion (200) of the track (110).

**3.** The cable management system (100) as recited in claims 1-2, wherein said engagement member (135) includes one of a key (800) for engageably coupling the spool (115) to said track (110) and a tab (145) that is wider than said track (110) and engages an underside portion of the mounting member (105) adjacent to the track (110).

**4.** The cable management system (100) as recited in any of the preceding claims, wherein said engagement member (135) is biased to an engaged position.

**5.** The cable management system (100) as recited in any of the preceding claims, wherein said engagement member (135) engages the track (110) upon rotation of the spool body (120).

**6.** The cable management system (100) as recited in any of the preceding claims, wherein the spool body (120) tapers from the distal end (130) to the proximate end (125), such that the distal end (130) is wider than the proximate end (125).

**7.** The cable management system (100) as recited in any of the preceding claims, wherein the mounting member (135) is coated with one of a static dissipative paint and a conductive paint.

**8.** The cable management system (100) as recited in any of the preceding claims, wherein the spool (115) comprises a plastic having an electrostatic additive.

**9.** The cable management system (500) as recited in any of the preceding claims, further comprising an end control member (505).

**10.** The cable management system (500) of claim 9, wherein said end control member (505) is releasably coupled to the mounting member (105).

**11.** The cable management system (500) as recited in claims 9-10 wherein said end control member (505) includes a guide (510) that has a first end (515) that is parallel to said at least two tracks (110).

**12.** The cable management system (500) as recited in claims 9-11, wherein said end control member (505) includes a second end (520) that is perpendicular to the at least two tracks (110).

**13.** The cable management system (100) as recited in any of the preceding claims, wherein said at least two tracks (110) comprises four tracks and wherein a first pair of said tracks are aligned such that a centerline (220) of each track of the first pair of tracks is along the same line.

**14.** The cable management system (100) of claim 13, wherein a second pair of tracks are aligned such that the centerline (225) of each track of the second pair of tracks is along the same line.
